(19) Europäisches Patentamt / European Patent Office / Office européen des brevets

(11) **EP 4 618 008 A1**

(12) **EUROPÄISCHE PATENTANMELDUNG**

(43) Veröffentlichungstag:
**17.09.2025   Patentblatt 2025/38**

(21) Anmeldenummer: **24163672.9**

(22) Anmeldetag: **14.03.2024**

(51) Internationale Patentklassifikation (IPC):
*G06T 7/00* (2017.01)

(52) Gemeinsame Patentklassifikation (CPC):
**G06T 7/0004;** G06T 2207/10016;
G06T 2207/20081; G06T 2207/20084

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Henkel AG & Co. KGaA**
**40589 Düsseldorf (DE)**

(72) Erfinder:
• **MAIER, Maximilian**
**40223 Düsseldorf (DE)**

• **WALOCH, Christoph**
**40764 Langenfeld (DE)**
• **DALLE, Victorien**
**1000 Brüssel (BE)**
• **SCHWARZ, Lynn**
**41464 Neuss (DE)**
• **HARTMANN, Peter**
**41812 Erkelenz (DE)**

(74) Vertreter: **Viering, Jentschura & Partner mbB**
**Patent- und Rechtsanwälte**
**Am Brauhaus 8**
**01099 Dresden (DE)**

(54) **VERFAHREN ZUR ERMITTLUNG VON EINZUSETZENDEN KLEBSTOFFEN BEI ZUSAMMENZUFÜGENDEN TEILOBJEKTEN**

(57)     Gemäß wird ein Verfahren zur Bildverarbeitung beschrieben, wobei das Verfahren das Ermitteln eines Objekts mit mehreren zusammenzufügenden Teilobjekten in einem jeden digitalen Bild von mehreren digitalen Bildern, die das Objekt enthalten, das Ermitteln einer oder mehrerer Porengrößen von Oberflächenmaterialien der zusammenzufügenden Teilobjekte des ermittelten Objekts, und

Das Ermitteln, unter Verwendung der einer oder der mehreren Porengrößen und mittels eines Modells, eines für das Zusammenfügen der Teilobjekte einzusetzenden Klebstoffs aus einem Satz mehrerer vorgegebener und gespeicherter Klebstoffe aufweist.

FIG 6

EP 4 618 008 A1

**Beschreibung**

Verschiedene Ausführungsbeispiele betreffen ein Verfahren zur Bildverarbeitung eines in einem oder mehreren digitalen Bildern erfassten Objekts, wobei das Objekt aus mehreren zusammenzufügenden Teilobjekte besteht.

Mithilfe von smarten Geräten, wie zum Beispiel Smartphones oder Mixed-Reality-Brillen, ist es heutzutage für Benutzer leicht möglich Bilder von ihrer Umgebung aufzunehmen.

Ein Benutzer kann leicht ein oder mehrere Bilder von einem zerbrochenen Objekt aufnehmen, d.h. von einem Objekt der Risse oder Brüche aufweist (z.B. ein Haushaltsgegenstand oder eine Fliese). Ein solches Objekt kann also anhand seiner Frakturen (Risse und/oder Brüche) unterteilt werden in mehrere Teilobjekte.

Es wäre wünschenswert anhand der aufgenommenen Objektbilder zu ermitteln welchen Klebstoff für das Zusammenfügen der Teilobjekte am besten geeignet ist.

Des Weiteren wäre es wünschenswert den Benutzer beim Zusammenfügen der Teilobjekte zu helfen, und die optimale Menge an zu verwendeten Klebstoff zu ermitteln.

Ein Verfahren mit den Merkmalen des unabhängigen Anspruchs ermöglicht das Ermitteln von einer oder mehrerer Porengrößen von Oberflächenmaterialien der zusammenzufügenden Teilobjekte des ermittelten Objekts, und das Ermitteln, unter Verwendung der einer oder der mehreren Porengrößen und mittels eines Modells, beispielsweise eines Maschinen-Lern-Modells, eines für das Zusammenfügen der Teilobjekte einzusetzenden Klebstoffs.

Erfindungsgemäß, weist ein Verfahren zur Bildverarbeitung auf:

- Ermitteln eines Objekts mit mehreren zusammenzufügenden Teilobjekten in einem jeden digitalen Bild von mehreren digitalen Bildern, die das Objekt enthalten;
- Ermitteln einer oder mehrerer Porengrößen von Oberflächenmaterialien der zusammenzufügenden Teilobjekte des ermittelten Objekts; und
- Ermitteln, unter Verwendung der einer oder der mehreren Porengrößen und mittels eines Modells, eines für das Zusammenfügen der Teilobjekte einzusetzenden Klebstoffs aus einem Satz mehrerer vorgegebener und gespeicherter Klebstoffe.

Die Erfindung stellt ein Verfahren zur Verfügung, mit dem die Eigenschaften von Oberflächen auf Objekten, die mit einem Klebstoff repariert werden sollen, identifiziert werden können, um einen geeigneten Klebstoff für die Durchführung einer Reparaturaufgabe zu bestimmen.

Beispielswiese weist das Verfahren weiter auf:
Erfassen von mehreren digitalen Bildern, die das Objekt enthalten, wobei die mehreren digitalen Bilder das Objekt unter unterschiedlichen Winkeln und/oder bei unterschiedlichen Lichtverhältnissen erfassen.

Mehrere digitale Bilder, die aus verschiedenen Winkeln und bei unterschiedlichen Lichtverhältnissen aufgenommen wurden, liefern eine genauere Beschreibung der Strukturmerkmale der zu reparierenden Oberflächen. Bei der Verarbeitung von Digitalbildern, die aus verschiedenen Winkeln und unter verschiedenen Beleuchtungsbedingungen aufgenommen wurden, lassen sich einzelne Merkmale, insbesondere in Bezug auf die Porosität oder Rauheit der Oberflächen auf den Digitalbildern, noch besser erkennen.

Beispielswiese erfolgt das Ermitteln, unter Verwendung der einer oder der mehreren Porengrößen, eines für das Zusammenfügen der Teilobjekte einzusetzenden Klebstoffs aus einem Satz mehrerer vorgegebener und gespeicherter Klebstoffe, mittels eines Maschinen-Lern-Modells.

Beispielswiese weist das Verfahren weiter auf:

- Ermitteln einer oder mehrerer Oberflächenmaterialien der zusammenzufügenden Teilobjekte des ermittelten Objekts;
- wobei beim Ermitteln des einzusetzenden Klebstoffs das oder die ermittelten Oberflächenmaterialien berücksichtigt werden.

Beispielswiese weist das Verfahren weiter auf:
Ermitteln, mittels eines Maschinen-Lern-Modells, einer für das Zusammenfügen der Teilobjekte erforderlichen Menge des ermittelten Klebstoffs.

Beispielswiese weist das Verfahren weiter auf:
Ermitteln einer Anleitung zum Durchführen des Zusammenfügens der Teilobjekte.

Beispielswiese weist das Verfahren weiter auf:
Durchführen des Zusammenfügens der Teilobjekte unter Verwendung des ermittelten Klebstoffs.

Beispielsweise wird das Zusammenfügen der Teilobjekte unter Einsatz von Augmented Reality durchgeführt.

Der Begriff "Augmented Reality" kann man auch "erweiterte Realität" oder "angereicherter Realität" nennen.

Die Erfindung betrifft auch ein Computerlesbares Speichermedium, in dem Instruktionen gespeichert sind, die, wenn sie von einem Prozessor ausgeführt werden, ein Verfahren wie oben beschrieben implementieren.

Ausführungsbeispiele der Erfindung sind in den Figuren dargestellt und werden im Folgenden näher erläutert. In den Zeichnungen beziehen sich gleiche Bezugszeichen überall in den mehreren Ansichten allgemein auf dieselben Teile. Die Zeichnungen sind nicht notwendig maßstabsgerecht, wobei der Schwerpunkt stattdessen allgemein auf die Darstellung der Prinzipien der Erfindung liegt.

**Figur 1** zeigt ein Flussdiagramm, das ein Verfahren zur Objekterkennung veranschaulicht;

**Figur 2** zeigt ein Flussdiagramm, das ein Verfahren zur Bestimmung der Oberflächenporosität eines Objekts veranschaulicht;

**Figur 3** zeigt ein Flussdiagramm, das ein Verfahren gemäß verschiedenen Aspekten dieser Offenbarung zum Ermitteln eines einzusetzenden Klebstoffes zum Zusammenfügen von Teilobjekten veranschaulicht;

**Figur 4** zeigt ein Flussdiagramm, das ein beispielhaftes Ablaufschema gemäß verschiedenen Aspekten dieser Offenbarung zur Ermittlung eines Klebstoffes bei einem festgestellten Riss des Primärobjekts veranschaulicht;

**Figur 5** zeigt ein Flussdiagramm, das ein beispielhaftes Ablaufschema gemäß verschiedenen Aspekten dieser Offenbarung zur Ermittlung eines Klebstoffes bei einem festgestellten Bruch des Primärobjekts veranschaulicht;

**Figur 6** zeigt ein Flussdiagramm, das ein Verfahren zur Bildverarbeitung gemäß verschiedenen Aspekten dieser Offenbarung veranschaulicht; und

**Figur 7** zeigt eine Vorrichtung gemäß verschiedenen Aspekten dieser Offenbarung.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung, eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

Bevor ermittelt wird, mit welchem Klebstoff die mehreren Teilobjekte (am besten) zusammengefügt werden können, ist es vorgesehen, das Primärobjekt sowie die dazugehörigen Teilobjekte eindeutig zu erkennen und zu erfassen, wobei "Primärobjekt" in dieser Offenbarung das Objekt beschreibt der aus den mehreren zusammengefügte Teilobjekte entsteht.

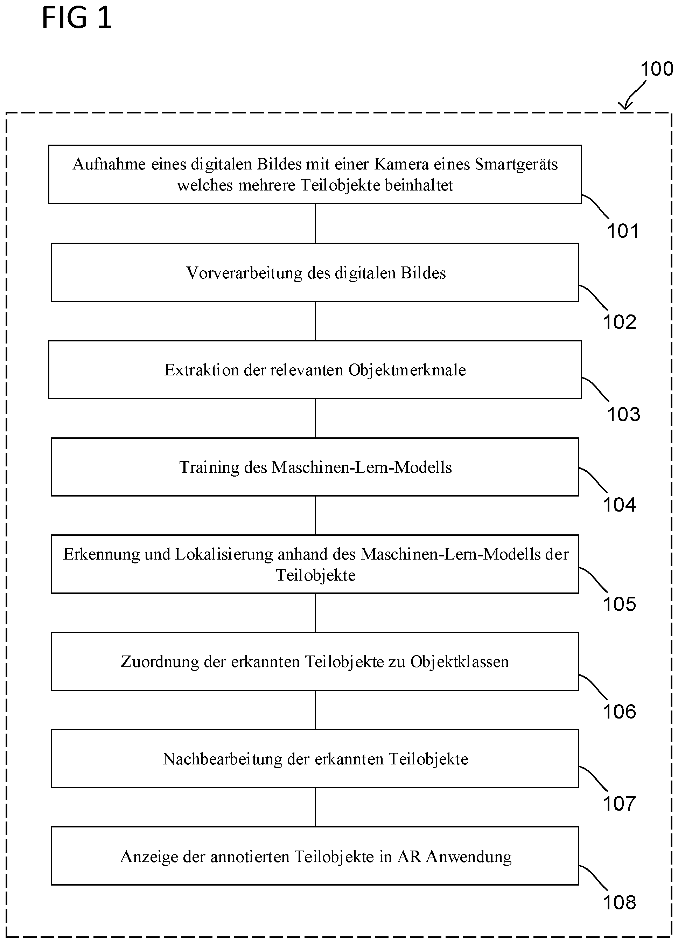

**Figur 1** zeigt ein Flussdiagramm 100, das ein Verfahren zur Objekterkennung in digitale Bilder veranschaulicht.

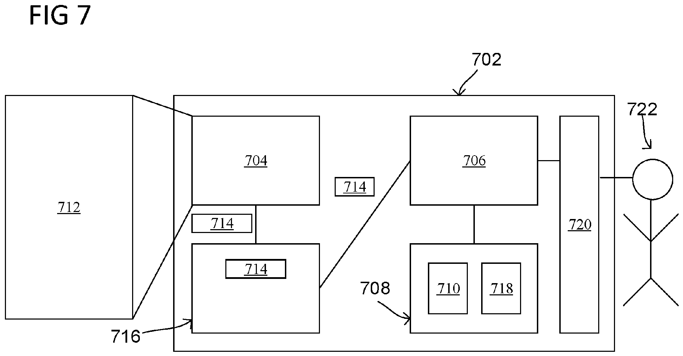

In dem Verfahren von Figur 1 (und auch in den anderen Verfahren dieser Beschreibung) kann ein Smartgerät vorgesehen sein (siehe beispielsweise tragbares Smartgerät 702 in Figur 7), z.B. ein Smartphone oder eine Mixed-Reality-Brille, das über (mindestens) eine Kamera 704, einen oder mehrere mit der Kamera 704 gekoppelten Prozessoren 706, einen mit dem oder den Prozessoren 706 gekoppelten Speicher 708 (allgemein ein computerlesbares Speichermedium), das geeignete Computerprogramme 710, anders ausgedrückt Software, für angereicherte Realität ("Augmented Reality", AR) verfügt. Ferner ist ein Bildspeicher 716 vorgesehen, der mit der Kamera 704 und mit dem Prozessor 706 gekoppelt ist.

In 101 wird eine Szene 712 mit der Kamera 704 des Smartgerätes 702 aufgenommen, wobei die Szene 712 mindestens einen Primärobjekt und mehrere Teilobjekte beinhaltet. Die Kamera 704 erzeugt eine zeitliche Folge von digitalen Bildern 714 und speichert diese in dem Bildspeicher 716. Zusätzlich zu der Folge von digitalen Bildern 714 können (falls vorhanden) Sensordaten von im Smartgerät 702 optional integrierten Sensoren, wie z.B. CCD-oder CMOS-Sensoren, ebenfalls verwendet werden zum Erzeugen von einer zeitlichen Folge von digitalen Bildern, die in dem Bildspeicher 716 gespeichert werden können.

**EP 4 618 008 A1**

In 102 wird ein in 101 aufgenommenes digitales (Roh)Bild der Folge von digitalen Bildern 714 mittels des oder der Prozessoren 706 aus dem Bildspeicher 716 ausgelesen und vorverarbeitet, um die Bildqualität zu verbessern und um Rauschen aus dem digitalen (Roh)Bild zu entfernen oder zumindest zu reduzieren, das die Objekterkennung beeinträchtigen könnte. Zur Vorverarbeitung gehört zum Beispiel Größenanpassung, Normalisierung und Rauschunterdrückung.

In 103 extrahiert oder extrahieren der oder die Prozessoren 706 ein oder mehrere relevante (Objekt-)Merkmale aus dem in 102 vorverarbeitetem Bild. Relevante (Objekt-)Merkmale können zum Beispiel Kanten, Farben, Texturen, bestimme Formen oder (komplexe) Muster in dem vorverarbeiteten digitalen Bild sein.

In 104 trainiert oder trainieren der oder die Prozessoren 706 ein Modell 718 (das oder die Modelle 718 können in dem Speicher 710 oder in einem beliebigen anderen Speicher des Smartgeräts 702 oder auch extern von dem Smartgerät 702 gespeichert sein oder werden; bei einem externen Speicher wird/werden das/die Modelle von dem externen Speicher in das Smartgerät 702 geladen), beispielsweise ein adaptives Modell, beispielsweise ein Maschinen-Lern-Modell, so dass Zusammenhänge zwischen den in 103 extrahierten Merkmalen und einer Mehrzahl an verschiedenen (beispielsweise vorgegebenen oder vordefinierten) (Teil-)Objektklassen gelernt werden.

Das Modell kann mehrere (beliebig komplexe) Teilmodelle aufweisen. Als Modell für ein maschinelles Lernen kann ein Modell, das auf Bilderkennung und Bildklassifizierung spezialisiert (trainiert) ist, verwendet werden, beispielsweise Deep-Learning-Modelle wie z.B. neuronale Konvolutionsnetzwerke (CNNs).

In 105, erkennt oder erkennen der oder die Prozessoren 706 dann anhand des trainierten Modells 718, das (oder mehrere) Primärobjekt sowie die mehreren Teilobjekte, und lokalisiert dieselbe innerhalb des jeweiligen Bildes.

In 106 ordnet oder ordnen der oder die Prozessoren 706 anhand des Modells 718 die erkannten (Teil-)Objekte verschiedenen (z.B. vordefinierten) Objektklassen zu. Beispiele für "relevante" Objektklassen sind z.B. Tisch, Fenster, Rahmen, Waschbecken, usw.

In 107 bearbeitet oder bearbeiten der oder die Prozessoren 706 die in 106 ermittelte Klassifizierung der Objekte nach. Dieses sogenanntes "Post-Processing" wird durchgeführt, um die Ergebnisse zu verfeinern und falsch positive Ergebnisse zu entfernen. Dabei können verschiedene Algorithmen, Verfahren und Techniken, wie z.B. die Nicht-Maxima Unterdrückung (non-maximum suppression, NMS) verwendet werden, um die zuverlässigsten Vorhersagen auszuwählen und redundante oder überlappende Begrenzungsrahmen zu verwerfen.

In 108 kann oder können der oder die Prozessoren 706 die ermittelten (und gegebenenfalls nachbearbeiteten) (Teil-)Objekte über die Ansicht des Benutzers 722 in einer AR Anwendung legen (z.B. falls das Smartgerät 702 eine Mixed-Reality-Brille ist) und beispielsweise dem Benutzer 722 des Smartgeräts 702 auf einer Anzeigevorrichtung 720 des Smartgeräts 702 ausgeben. Dies kann zum Beispiel das Hinzufügen von Beschriftungen, Anmerkungen oder 3D-Visualisierungen der ermittelten (Teil-)Objekte beinhalten.

Das Verfahren von Figur 1 ermöglicht es, mindestens ein Primärobjekt und mehrere Teilobjekte in einem digitalen Bild zu erkennen, und dann mithilfe von AR dem Benutzer 722 Angaben zu den erkannten (Teil-)Objekten anzuzeigen.

Um Anomalien, Schäden und/oder Defekte in den erkannten Objekte zu identifizieren, kann eine Mehrzahl an digitalen Bildern nötig sein, welche die erkannten Objekten unter unterschiedlichen Winkeln und/oder bei unterschiedlichen Lichtverhältnissen zeigen und erfassen.

Um besser Anomalien, Schäden und/oder Defekte in den Objekten zu erkennen, können Datenströmen aus zusätzlichen Sensoren/Eingabegeräten mit den digitalen Bildern kombiniert werden.

Zum Beispiel können zusätzlich Infrarot-(IR)-Bildsensoren (Nahinfrarot-Erkennung), LiDAR-Sensoren, VOC-Erkennung, Geolokalisierung (GPS), Wetterdaten, Kapazitätssensoren für die Ermittlung der Objektporosität und/oder Tiefensensoren verwendet werden. Die Tiefensensoren können z.B. strukturierte Lichtsensoren sein, die es ermöglichen zusätzlich zum visuellen Bild Tiefeninformationen zu erfassen.

Des Weiteren können in der AR Anwendung auch verborgene Infrastrukturen wie Stromleitungen und Rohre dem Benutzer 722 angezeigt werden. Die dazu zusätzlich benötigten Informationen können z.B. über die Registrierung während eines Bauprozesses, über Erkennung durch spezialisierte Tools, oder durch optische Messmethoden erhalten und von dem oder den Prozessoren 706 ermittelt werden (z.B. wo sich Rohre usw. befinden sollten, basierend auf den Abständen von Strahlen oder dem Standort einer Steckdose).

Die Objekterkennung bzw. der Bilddatensatz kann weiter verfeinert werden, indem der Benutzer 722 aus einer (beispielsweise in dem Speicher 708 gespeicherten) Liste von vorgeschlagenen Oberflächen, Materialien, Farben, Mustern, Texturen, usw., mittels eines oder mehrerer (nicht dargestellten) Eingabegeräten (z.B. Tastatur, Spracherkennungseinrichtung, etc.) und mittels des einen oder der mehrere Prozessoren 706 auswählen kann. Dadurch können Ungenauigkeiten in den Daten (z.B. schlechte Beleuchtung, schwer erkennbare (Teil-)Objekte) durch Benutzereingaben ausgeglichen werden.

Um ein geeigneten Klebstoff/Adhäsiv zur Objektreparatur vorzuschlagen, wird auf ein vorgefiltertes Bild eines Primärobjekts und seiner Teilobjekte (wie z.B. mit dem Verfahren von Figur 1) eine trainierte Künstliche Intelligenz (KI) bzw. das trainierte Modell 718, beispielsweise das trainierte Maschinen-Lern-Modell 718 zur Bildanalyse angewendet.

Ein wichtiges Merkmal für die Wahl eines geeigneten Klebstoffes ist die Oberflächenporosität des Primärobjekts bzw. seiner Teilobjekte.

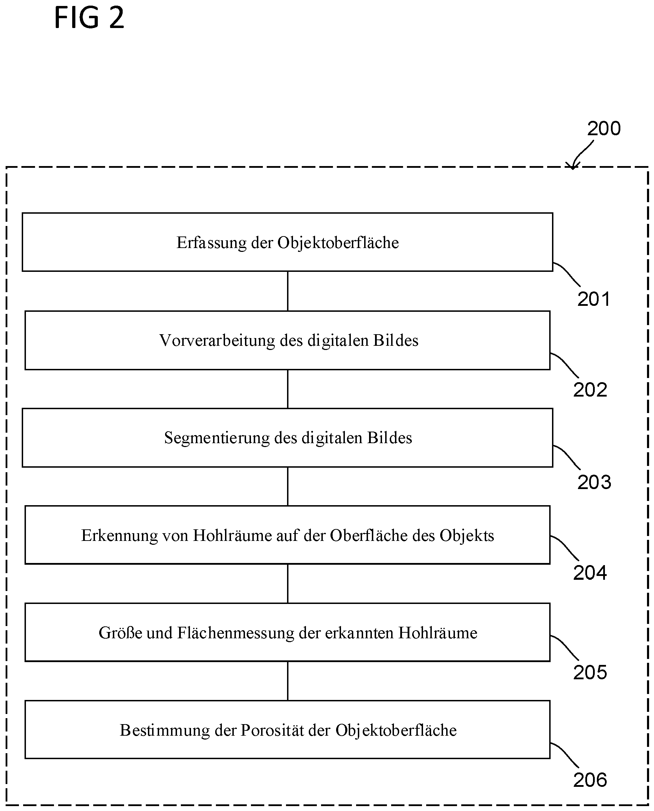

**Figur 2** zeigt ein Flussdiagramm 200, das ein (von dem oder den Prozessoren 706 durchgeführtes) Verfahren zum Ermitteln (Schätzen) der Oberflächenporosität eines (Teil-)Objekts veranschaulicht.

Der Begriff "Porosität" bezieht sich im Rahmen dieser Beschreibung auf den prozentualen Anteil von Hohlräumen (Poren) in einem Objekt (Material) im Verhältnis zu seinem Gesamtvolumen.

In 201 wird die Oberfläche des in dem digitalen Bild befindlichen und erkannten (Teil-)Objekt erfasst. Beispielsweise werden das Objekt und seine Oberfläche in hoher Auflösung mittels der Kamera 704 erfasst, zum Beispiel in 4k-Auflösung oder in 8k-Auflösung.

In 202 wird das Bild vorverarbeitet, um die Qualität zu verbessern, Beleuchtungsschwankungen auszugleichen und um Rauschen zu reduzieren.

In 203 wird das digitale Bild mittels Bildsegmentierungstechniken segmentiert, um die interessierenden Oberflächenbereiche der Teilobjekte zu isolieren. Zum Beispiel kann die Oberfläche vom Hintergrund und anderen irrelevanten Teilen des Bildes getrennt werden.

Nachdem die Objektoberfläche in 203 segmentiert ist, werden in 204 Verfahren angewendet, um einzelne Hohlräume (Poren) auf der Oberfläche zu erkennen. Dies kann zum Beispiel die Erkennung von Kanten, lokalen Intensitätsschwankungen oder spezifischen Merkmalen im Zusammenhang mit Poren beinhalten.

Nach der Erkennung einzelner Hohlräume (Poren) werden in 205 ihre Größe und ihre Fläche gemessen. Dies kann zum Beispiel durch das Zählen von Pixeln eines als Hohlraum klassifizierten (Teil-)Objekts in dem digitalen Bild oder durch die Verwendung von Kalibrierungsinformationen zur Umwandlung von Pixelmessungen in physikalische Messungen erfolgen.

In 206 wird dann die Porosität der (Teil-)Objektoberfläche ermittelt, indem das Verhältnis zwischen der Gesamtfläche der Poren in dem jeweiligen (Teil-)Objekt und der Gesamtoberfläche des jeweiligen (Teil-)Objekts berechnet wird.

Die in verschiedenen Aspekten dieser Offenbarung verwendete Formel für die Porosität lautet:

$$\text{Porosität } (\%) = (\text{Gesamtporenfläche}/\text{Gesamtoberfläche}) *100$$

Die Genauigkeit der ermittelten Oberflächenporosität hängt von der Qualität der Bilder, der Segmentierungs- und Porenerkennungsverfahren, sowie von Unregelmäßigkeiten oder Rauschen auf der Oberfläche des erkannten (Teil-) Objekts in dem jeweiligen Bild ab.

Für die Oberflächensegmentierung und Porenerkennung können Techniken des maschinellen Lernens eingesetzt werden, insbesondere wenn es sich um komplexe Oberflächen oder einen großen Datensatz an digitalen Bildern, die zum Trainieren des Modells 718 verwendet werden, handelt.

Durch das Trainieren des Modells 718, beispielsweise des Maschinen-Lern-Modells 718 auf markierten Daten kann das Modell lernen, Oberflächenmerkmale automatisch zu erkennen und zu segmentieren, wodurch der Prozess effizienter und genauer wird.

Ein Beispiel für ein solches Trainingsverfahren ist es Trainingsdatensätze mit hochporösen Materialien, z.B. extrudiertes Polystyrol (XPS) oder Porenbeton, mittelporösen Materialien, z.B. unbehandeltes Holz, und gering porösen Materialien, z.B. keramisch glasierte Fliesen, Metalle, Polyvinylchlorid (PVC), Polyethylen (PE), zu verwenden.

Im Folgenden wird eine beispielhafte Defektbildanalyse bei einer Faktur eines Primärobjekts näher erläutert.

Im Folgenden wird, um ein geeigneten Klebstoff (Adhäsiv) für das zusammenfügen von Teilobjekten eines Primärobjekts zu ermitteln, ein vorgefiltertes (vorverarbeitetes) digitales Bild (beispielsweise die Folge von digitalen Bildern 714) mithilfe einer trainierten KI zur Bildanalyse in mehrere Teilbereiche (Teilobjekte/Teilbruchstücke) unterteilt.

Für die (optische) Frakturkohärenz eines Primärobjektes wird zwischen Riss und Bruch unterschieden. Ein Riss ist gekennzeichnet durch einen zusammenhängenden Bereich des Primärobjektes ohne erkennbare Unterbrechung von Farbe oder Textur, d.h. ein Riss tritt auf als begrenzte Werkstofftrennung innerhalb des Primärobjektes. Ein Bruch ist gekennzeichnet durch mehrere Teile gleicher Farbe, Textur, mit einer oder mehreren größeren Unterbrechungen durch Bereiche deutlich anderer Farbe und Textur (z.B. solches des Bildhintergrundes).

Beim Riss wird folgendes ermittelt und berücksichtigt:

### i) Rissausdehnung:

Die Rissausdehnung wird optisch ermittelt. Optional erfolgt zusätzlich eine unterstützende manuelle Eingabe durch den Benutzer (z.B. Benutzer 722 des Smartgeräts 702).

Die Ausdehnung eines Risses wird in folgende Klassen unterteilt (als Abstand der Unterbrechung des Objektes):

Breite des Risses:

- Haarriss: 0.2 bis 0.5 mm;
- Haarriss: 0.5 bis 1.5 mm;
- Riss: 1,5 bis 4,0 mm;
- Riss: 4 bis 5 mm;
- Riss: Mehr als 5 mm.

Tiefe des Risses:

- Haarriss kleiner als 1 cm;
- Riss: 1 bis 10 cm;
- Riss: Größer als 10 cm.

Die Länge des Risses kann optional ebenfalls erfasst werden.

### ii) Ermittlung des Materials:

Das Material, die Materialdichte und/oder die Elastizität des Materials des (Primär-)Objektes (bzw. der Stelle der Anomalie) wird mithilfe der Bilddatenbank der trainierten KI ermittelt.

Optional kann eine unterstützende manuelle Eingabe durch den Benutzer (z.B. Benutzer 722 des Smartgeräts 702) erfolgen.

### iii) Ermittlung der Porosität:

Die Porosität des (Primär-)Objektes bzw. seiner Oberfläche und/oder eines Teils seiner Oberfläche wird z.B. durch das Verfahren von Figur 2 ermittelt (und/oder durch eine Bild/Materialdatenbank) .

Optional kann zusätzlich eine Porosität-Messung erfolgen und/oder eine manuelle Eingabe des Benutzers zur Porosität vorliegen.

Danach wird entschieden ob Porosität vorliegt oder nicht (ja/nein Entscheidung), z.B. wird das (Teil-)Objekt als porös eingestuft falls seine ermittelte Porosität unter einen vorher definierten Basiswert (Schwellenwert) liegt.

Bei einem Bruch im Primärobjekt wird folgendes ermittelt und berücksichtigt:

### i) Frakturerkennung und Frakturabmessung:

Die Fraktur (Bruchlinien) wird optisch erkannt und gemessen.

Optional kann eine unterstützende manuelle Eingabe durch den Benutzer erfolgen (z.B. Benutzer 722 des Smartgeräts 702).

Die Konturen werden erkannt und die Anzahl der Einzelbruchstücke ermittelt.

Konturanalyse der Passgenauigkeit der Bruchkanten:

- mehr 95 % Übereinstimmung: "Klasse S";
- mehr als 85 % Übereinstimmung: "Klasse A";
- mehr als 75% Übereinstimmung: "Klasse B";
- weniger als 75% Übereinstimmung: "kein Bruch detektierbar".

### ii) Länge der Bruchkante im Verhältnis zur Länge des Gesamtobjektes:

Die Gesamtkantenlängen der Bruchstücke wird optisch bestimmt, sowie das Verhältnis der Kantenlänge des Bruches zu der Kantenlänge der intakten Grenzflächen.

### iii) Ermittlung des Materials:

Das Material, die Materialdichte und/oder die Elastizität des Materials des (Primär- oder Teil-)Objektes wird mithilfe der Bilddatenbank der trainierten KI ermittelt.

Optional kann eine unterstützende manuelle Eingabe durch den Benutzer erfolgen (z.B. Benutzer 722 des Smartgeräts 702).

### iv) Ermittlung der Porosität:

Die Porosität des (Primär- oder Teil-)Objektes bzw. seiner Oberfläche und/oder eines Teils seiner Oberfläche wird z.B. durch das Verfahren von Figur 2 ermittelt (und/oder durch eine Bild/Materialdatenbank).

Optional kann zusätzlich eine Porosität-Messung erfolgen und/oder eine manuelle Eingabe des Benutzers zur Porosität vorliegen.

Danach wird entschieden ob Porosität vorliegt oder nicht (ja/nein Entscheidung), z.B. wird das (Teil-)Objekt als porös bestimmt falls seine ermittelte Porosität unter einen vorher definierten Basiswert (und/oder Schwellenwert) liegt.

### v) Vorliegen von Verunreinigung:

Es wird optisch (z.B. durch Reflektion, Glanz, unregelmäßige Textur oder Farbe) ermittelt, ob Verunreinigungen am (Primär- oder Teil-)Objekt vorliegen, z.B. durch alten Klebstoff, Schimmel oder Schmutz.

Im Folgenden wird ein beispielhaftes Verfahren zur Ermittlung eines (am besten) geeigneten Klebstoffes/Adhäsiv für das Zusammenfügen von mehreren Teilobjekten eines Primärobjektes erläutert, wobei beim Primärobjekt eine oder mehrere Frakturen (Risse und/oder Brüche) vorliegen.

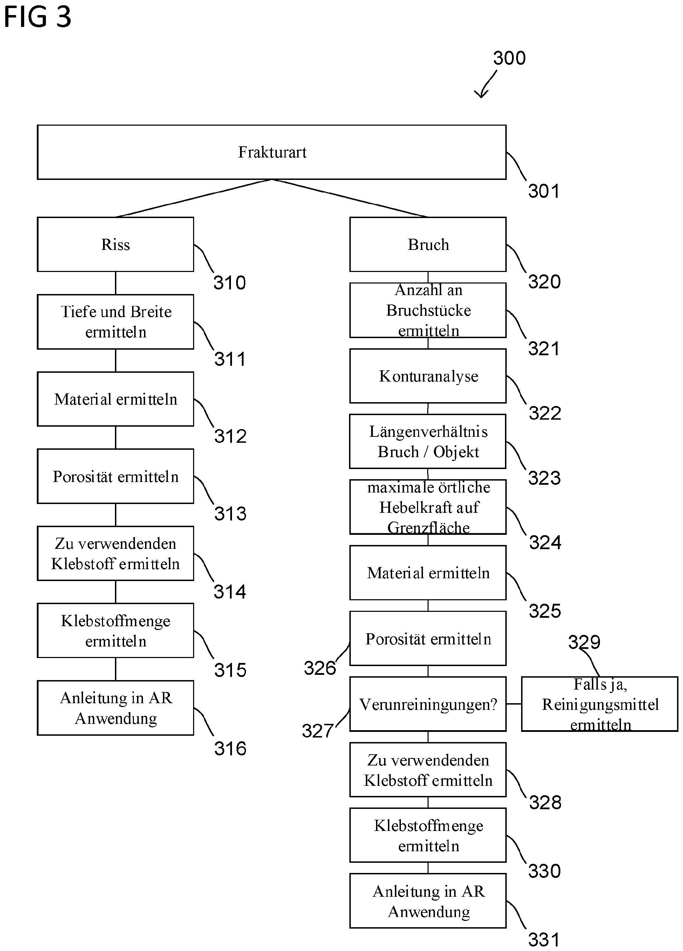

**Figur 3** zeigt ein Flussdiagramm 300, das ein (von dem oder den Prozessoren 706 durchgeführtes) Verfahren gemäß verschiedenen Aspekten dieser Offenbarung zum Ermitteln eines einzusetzenden Klebstoffes zum Zusammenfügen von Teilobjekten veranschaulicht.

Der einzusetzende Klebstoff (Adhäsiv) wird aus einem Satz vorgegebener und beispielsweise in dem Speicher 708 gespeicherten Klebstoffe ausgewählt (in Figur 7 nicht dargestellt).

Nachdem das Primärobjekt und die Teilobjekte eindeutig identifiziert worden sind, z.B. mit dem Verfahren von Figur 1, kann mithilfe der oben erläuterten Defektbildanalyse, folgendermaßen ermittelt werden welcher Klebstoff für das Zusammenfügen der Teilobjekte (am besten) geeignet ist:

In 301 wird die Frakturart des Primärobjekts ermittelt, d.h. es wird ermittelt ob es sich bei der Mehrzahl an Teilobjekte um Objekte handelt die aus einem oder mehreren Rissen 310 oder aus einem oder mehreren Brüchen 320 des Primärobjekts entstanden sind handelt.

Falls es sich um einen (oder mehreren) Riss 310 handelt, wird in 311 die Breite und die Tiefe des Risses ermittelt.

In 312 wird dann das Material der Teilobjekte ermittelt (und/oder der Teilobjektoberflächen und/oder der Stelle des Risses). Zum Beispiel können die Teilobjekte aus Holz, Putz, Keramik, Glas, Stein, Kunststoff, usw., sein.

In 313 wird ermittelt ob Porosität vorliegt (ja/nein Entscheidung), zum Beispiel mit Hilfe des Verfahrens von Figur 2.

In 314 werden dann auf Basis der in 311, 312 und 313 ermittelten Riss-Merkmale ein oder mehrere Klebstoffe (Adhäsive/Haftmitteln) aus einer Reihe vorgegebener (und gespeicherter) Klebstoffe, als zu verwendenden Klebstoffes zum Zusammenfügen der Teilobjekte dem Benutzer 722 empfohlen (beispielsweise mittels der Anzeigevorrichtung 720).

Beispiele für empfohlene Klebstoffe sind:

- chemisch härtende Klebstoffe, z.B. Cyanacrylate, Methylmethacrylate, Epoxid, Silikone, Polyimide, usw., und/oder

- physikalisch abbindende Haftmittel, z.B. lösemittelhaltige Nassklebstoffe, Diffusionsklebstoffe, Kontaktklebstoffe, wasserbasierte Dispersionsklebstoffe, Schmelzklebstoffe, Plastisole, usw.

Optional kann in 315 die zum Zusammenfügen der Teilobjekte empfohlene Klebstoffmenge des in 314 ausgewählten Klebstoffes dem Benutzer 722 angezeigt werden (beispielsweise mittels der Anzeigevorrichtung 720).

Optional kann in 316 eine Anleitung zum Durchführen des Zusammenfügens der Teilobjekte dem Benutzer 722 angezeigt werden (beispielsweise mittels der Anzeigevorrichtung 720).

Falls es sich um einen oder mehreren Brüchen 320 handelt, wird in 321 die Anzahl an Bruchstücke (Teilobjekte) ermittelt.

In 322 wird mithilfe einer Konturanalyse die Passgenauigkeit der Bruchkanten ermittelt und in verschiedene Klassen unterteilt.

Zum Beispiel wird der Bruch bei mehr als 95% Übereinstimmung der Passgenauigkeit der Kontur in "Klasse S" unterteilt, bei mehr als 85% Übereinstimmung (und weniger als 95%) in "Klasse A", bei mehr als 75% Übereinstimmung (und weniger als 85%) in "Klasse B", und bei weniger als 75% Übereinstimmung wird der Bruch als "nicht detektierbar" eingestuft.

In 323 wird das Längenverhältnis zwischen Bruch und Primärobjekt ermittelt.

Die Gesamtkantenlängen der Bruchstücke wird optisch bestimmt, sowie das Verhältnis der Kantenlänge des Bruches zu der Kantenlänge der intakten Grenzflächen.

Zum Beispiel wird das Verhältnis unterteilt in Bruch größer als Objekt, Bruch gleich lang wie Objekt, Bruch kleiner als Objekt, und/oder in feinere Zwischenabstufungen unterteilt.

In 324 wird die maximale örtliche Hebelkraft auf der Grenzfläche ermittelt (in $N/mm^2$), und in verschieden Klassen unterteilt, z.B. kleiner als $1\ N/mm^2$, zwischen 1 und $3\ N/mm^2$, zwischen 4 und $10\ N/mm^2$, zwischen 10 und $20\ N/mm^2$ und größer als $20\ N/mm^2$.

In 325 werden die Materialen der Teilobjekte bestimmt (und/oder die Materialen der Teilobjektoberflächen). Zum Beispiel können die Teilobjekte aus Holz, Putz, Keramik, Glas, Stein, Kunststoff, usw., sein.

In 326 wird ermittelt ob Porosität vorliegt (ja/nein Entscheidung), zum Beispiel mit Hilfe des Verfahrens von Figur 2.

In 327 wird (optisch, z.B. durch Reflektion, Glanz, unregelmäßige Textur oder Farbe) ermittelt, ob Verunreinigungen am Primärobjekt (und/oder an einem oder mehreren Teilobjekten) vorliegen, z.B. durch alten Klebstoff, Schimmel oder Schmutz.

In 328 wird auf Basis der in 321, 322, 323, 324, 325, 326 und 327 ermittelten Bruch-Merkmale ein (oder mehrere) Klebstoffe (Adhäsive/Haftmitteln) aus einer Reihe vorgegebener und gespeicherter Klebstoffe ermittelt, und der ermittelte Klebstoff wird dem Benutzer 722 zum Zusammenfügen der Teilobjekte empfohlen (beispielsweise mittels der Anzeigevorrichtung 720).

Beispiele für empfohlene Klebstoffe sind:

- chemisch härtende Klebstoffe, z.B. Cyanacrylate, Methylmethacrylate, Epoxid, Silikone, Polyimide, usw., und/oder

- physikalisch abbindende Haftmittel, z.B. lösemittelhaltige Nassklebstoffe, Diffusionsklebstoffe, Kontaktklebstoffe, wasserbasierte Dispersionsklebstoffe, Schmelzklebstoffe, Plastisole, usw.

Falls Verunreinigungen vorliegen, wird optional in 329 ein empfohlenes Mittel zur Reinigung und/oder eine empfohlenes Reinigungsverfahren dem Benutzer 722 angezeigt (beispielsweise mittels der Anzeigevorrichtung 720).

Optional kann in 330 die zum Zusammenfügen der Teilobjekte empfohlene Klebstoffmenge des in 328 ermittelten Klebstoffes dem Benutzer 722 angezeigt werden (beispielsweise mittels der Anzeigevorrichtung 720).

Optional kann in 331 eine Anleitung zum Durchführen des Zusammenfügens der Teilobjekte dem Benutzer 722 angezeigt werden (beispielsweise mittels der Anzeigevorrichtung 720).

Des Weiteren können in dem Verfahren von Figur 3 mehrere unterschiedliche Klebstoffe zum Zusammenfügen der Teilobjekte dem Benutzer 722 empfohlen werden, z.B. einen ersten Klebstoff für einen ersten Bruch, einen zweiten Klebstoff für einen zweiten Bruch (oder Riss), usw.

Das Verfahren von Figur 3 kann optional dem Benutzer 722 mehr als einen Klebstoff für das Zusammenfügen der Teilobjekte empfehlen.

Optional können in den Verfahren von Figur 3 dem Benutzer 722 auf ein Smartgerät (z.B. Smartgerät 702) die zu erledigenden Aufgabe (Reinigung/Reparatur/Zusammenfügen der Teilobjekte) in Schritt-für-Schritt Anleitungen angezeigt werden, wobei die einzelnen Anleitungsschritte mithilfe von AR für den Benutzer 722 visualisiert werden können.

Optional kann das Zusammenfügen der Teilobjekte unter Verwendung des ermittelten Klebstoffs unter Einsatz von Augmented Reality durchgeführt werden.

Optional kann im Verfahren von Figur 3 dem Benutzer 722 das gesamte Projekt bzw. die komplette Reparaturmaßnahme in AR angezeigt werden, einschließlich Produktempfehlungen ("Einkaufsliste"). Optional kann dieser Output auch als digitales Dokument bereitgestellt werden, z.B. in einem standardisierten Datenformat, das einem Fachmann übergeben wird, einschließlich technisch relevanter Daten für den Fachmann (Abmessungen, Materialien, usw.).

Des Weiteren können dem Benutzer 722 nicht nur Klebstoffe empfohlen werden, sondern es kann auch angezeigt werden (beispielsweise mittels der Anzeigevorrichtung 720) wo die benötigten/empfohlenen Klebstoffe gekauft werden können.

Außerdem kann ein gemeinsamer Zugriff auf die (AR-)Anwendung die Zusammenarbeit zwischen Do-it-Yourself, DIY, Heimwerker und Fachmänner erleichtern und fördern.

Im Folgenden werden zwei beispielhaften Ablaufschemas bei Riss und bei Bruch des Primärobjekts veranschaulicht.

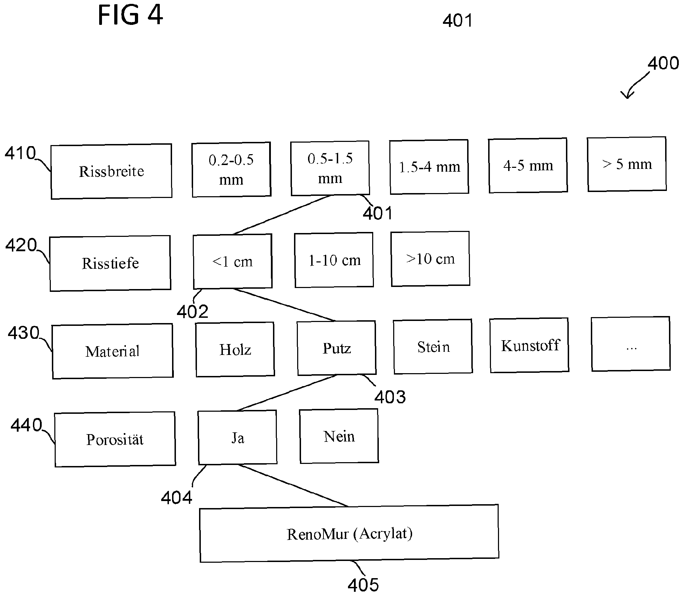

**Figur 4** zeigt ein Flussdiagramm 400, das ein (von dem oder den Prozessoren 706 durchgeführtes) beispielhaften Ablaufschema gemäß verschiedenen Aspekten dieser Offenbarung zur Ermittlung eines Klebstoffes bei einem festgestellten Riss des Primärobjekts veranschaulicht.

Im Ablaufschema (Verfahren) von Figur 4 wird anhand der (verarbeiteten) digitalen Bilder des Primärobjekts und der Teilobjekte eine beispielhafte Defektanalyse durchgeführt.

In 401 wird die Breite 410 des Risses auf zwischen 0,5 bis 1,5 mm geschätzt/ermittelt.

In 402 wird die Tiefe 420 des Risses auf unter 1 cm geschätzt/ermittelt.

In 403 wird das Material 430 als Putz identifiziert.

In 404 wird für das Objekt bzw. für die Teilobjekte die Porositätsfrage 440 bejaht.

In 405 wird als Klebstoff "RenoMur" (Acrylat) ermittelt und dem Benutzer 722 angezeigt (beispielsweise mittels der Anzeigevorrichtung 720).

Optional kann die (optimale) Klebstoffmenge dem Benutzer ebenfalls angezeigt werden (nicht in Figur 4 dargestellt).

Optional kann dem Benutzer auch eine Anleitung zur Anwendung angezeigt werden (nicht in Figur 4 dargestellt).

Im Beispiel von Figur 4 könnte dem Benutzer 722 als Anleitung beispielsweise "Verspachteln und direkt Überstreichen (bei Farbe mit 10% Dehnung), bzw. erst nach 6 h (bei Farbe mit <10 % Dehnung)" angezeigt werden (beispielsweise mittels der Anzeigevorrichtung 720).

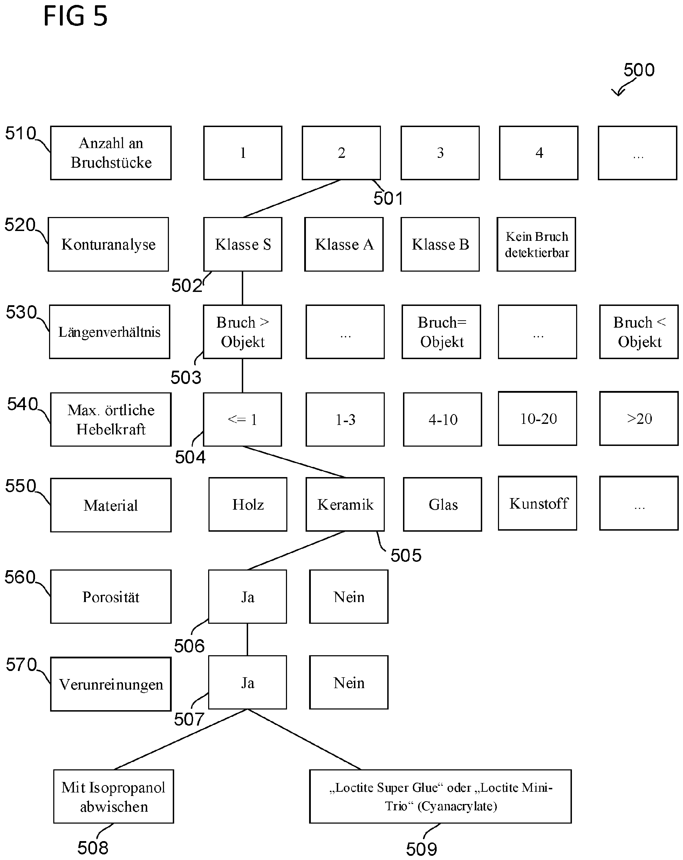

**Figur 5** zeigt ein Flussdiagramm, das ein (von dem oder den Prozessoren 706 durchgeführtes) beispielhaften Ablaufschema gemäß verschiedenen Aspekten dieser Offenbarung zur Ermittlung eines Klebstoffes bei einem festgestellten Bruch des Primärobjekts veranschaulicht.

In 501 werden 2 Bruchstücke/Teilobjekte ermittelt (wobei in 510 wird die Anzahl der Bruchstücke abgefragt/ermittelt wird).

In 502 ergibt die Konturanalyse 520 eine Passgenauigkeit der Bruchkanten der "Klasse S", d.h. mehr als 95 % Übereinstimmung.

In 503 wird das Längenverhältnis 530 der Kanten des Bruches zu den Kanten der intakten Grenzflächen als "Bruch größer als Objekt" ermittelt.

In 504 wird die maximale örtliche Hebelkraft 540 auf der Grenzfläche (statisch) auf kleiner als 1 N/mm$^2$ geschätzt/ermittelt.

In 505 wird das Material 550 als Keramik identifiziert.

In 506 wird für das Objekt bzw. für die Teilobjekte die Porositätsfrage 560 bejaht.

In 507 wird für das Objekt bzw. für die Teilobjekte die Verunreinigungsfrage 570 bejaht.

In 508 wird empfohlen, das Objekt bzw. die Teilobjekte mit Isopropanol (oder einem anderen Haushaltsalkohol) abzuwischen.

In 509 wird als Klebstoff für das Zusammenfügen der Teilobjekte "Loctite Super Glue" oder "Loctite Mini-Trio" (Cyanacrylate) empfohlen.

Optional kann die Klebstoffmenge dem Benutzer ebenfalls angezeigt werden (nicht in Figur 5 dargestellt).

Zum Beispiel könnte (im Fall von Figur 5) dem Benutzer 722 empfohlen werden "eine dünne Schicht des Klebstoffes einseitig aufzutragen".

Optional kann dem Benutzer auch eine Anleitung zur Anwendung angezeigt werden (nicht in Figur 5 dargestellt).

Im Beispiel von Figur 5 könnte dem Benutzer beispielsweise als Anleitung "Passgenau zusammenfügen und 10 Sekunden halten" angezeigt werden (beispielsweise mittels der Anzeigevorrichtung 720).

Es ist anzumerken, dass die Ablaufschemas (Verfahren) von Figur 4 und Figur 5 nur einzelne Bespiele darstellen um verschiedene Aspekte der vorliegenden Offenbarung zu veranschaulichen, und keineswegs vollständig sind.

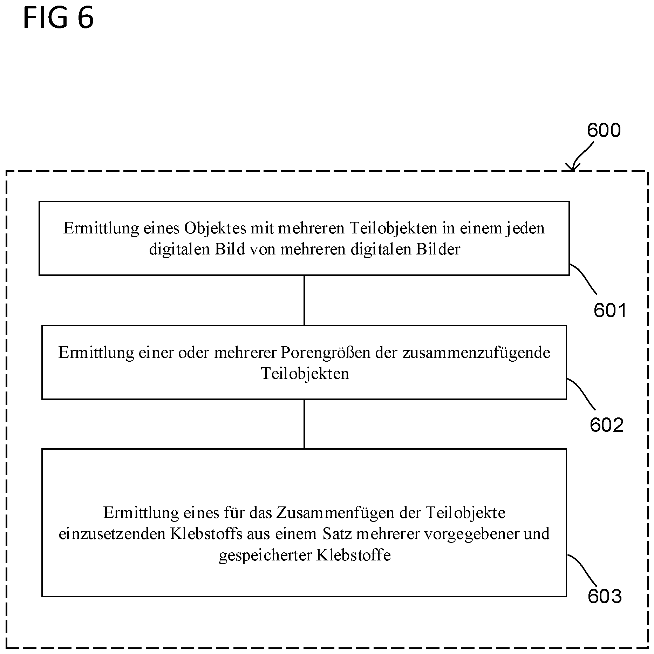

Zusammenfassend wird gemäß verschiedenen Ausführungsformen ein Verfahren bereitgestellt, wie es in Figur 6 dargestellt ist.

**Figur 6** zeigt ein Flussdiagramm, das ein (von dem oder den Prozessoren 706 durchgeführtes) Verfahren zur Bildverarbeitung gemäß einer Ausführungsform veranschaulicht.

In 601 wird ein Objekt mit mehreren zusammenzufügenden Teilobjekten ermittelt, in einem jeden digitalen Bild von mehreren digitalen Bildern, die das Objekt enthalten, wobei die mehreren digitalen Bilder das Objekt unter unterschiedlichen Winkeln und/oder bei unterschiedlichen Lichtverhältnissen erfassen.

In 602 werden eine oder mehrere Porengrößen der zusammenzufügenden Teilobjekte des ermittelten Objekts ermittelt.

In 603 wird eines für das Zusammenfügen der Teilobjekte einzusetzenden Klebstoffs aus einem Satz mehrerer vorgegebener und gespeicherter Klebstoffe ermittelt, unter Verwendung der einer oder der mehreren Porengrößen und mittels eines Modells, beispielweise eines Maschinen-Lern-Modells.

Gemäß verschiedenen Ausführungsbeispielen wird in anderen Worten ein Verfahren bereitgestellt, welches anhand von mehreren digitalen Bilder mehreren zusammenzufügenden Teilobjekten eines Objekts erfassen und mittels eines Modells, beispielsweise eines Maschinen-Lern-Modells, für die zusammenzufügenden Teilobjekten des Objekts einen (am besten geeigneten) Klebstoff ermittelt, wobei die Porosität der Oberflächenmaterialien der Teilobjekte bei der Ermittlung des Klebstoffes berücksichtig wird.

Optional wird das Zusammenfügen der Teilobjekte unter Verwendung des ermittelten Klebstoffs von einem Benutzer 722 unter Einsatz von Augmented Reality durchgeführt.

Zusammenfassend wird gemäß verschiedenen Ausführungsformen eine Vorrichtung bereitgestellt, wie in Figur 7 dargestellt.

Figur 7 veranschaulicht ein tragbares Smartgerät 702, der von einem Benutzer 722 bedient werden kann und konfiguriert ist ein oder mehrere digitale Bilder 714 von einer Szene 712 aufzunehmen.

Das Smartgerät 702 kann beispielsweise ein Smartphone oder eine Mixed-Reality-Brille sein.

Das Smartgerät 702 verfügt über (mindestens) eine Kamera 704, einen oder mehrere mit der Kamera 704 gekoppelten Prozessoren 706, einen mit dem oder den Prozessoren 706 gekoppelten Speicher 708 (allgemein ein computerlesbares Speichermedium).

Der Speicher 708 verfügt über geeignete Computerprogramme 710, anders ausgedrückt Software, für angereicherte Realität ("Augmented Reality", AR), und über ein oder mehrere Modelle 718.

Das oder die Modelle 718 können optional auch in einem beliebigen anderen Speicher des Smartgeräts 702 oder auch extern von dem Smartgerät 702 gespeichert sein oder werden; bei einem externen Speicher wird/werden das/die Modelle von dem externen Speicher in das Smartgerät 702 geladen.

Ferner verfügt das Smartgerät 702 über einen Bildspeicher 716, der mit der Kamera 704 und mit dem Prozessor 706 gekoppelt ist.

Die Kamera 704 des Smartgeräts 702 ist konfiguriert um eine zeitliche Folge von digitalen Bildern 714 zu erzeugen und in dem Bildspeicher 716 abzuspeichern. Zusätzlich zum zu der Folge von digitalen Bildern 714 können (falls vorhanden) Sensordaten von im Smartgerät 702 optional integrierten Sensoren, wie z.B. CCD-oder CMOS-Sensoren, ebenfalls verwendet werden zum Erzeugen von einer zeitlichen Folge von digitalen Bildern, die in dem Bildspeicher 716 gespeichert werden können.

Ferner verfügt das Smartgerät 702 über eine Anzeigevorrichtung 720 auf der dem Benutzer 722 beispielsweise die ermittelten (und gegebenenfalls nachbearbeiteten) Teilobjekte in einer AR Anwendung angezeigt werden (z.B. falls das Smartgerät 702 eine Mixed-Reality-Brille ist).

Die Anzeigevorrichtung 720 kann zum Beispiel Beschriftungen, Anmerkungen oder 3D-Visualisierungen für die ermittelten Teilobjekte hinzufügen.

**Patentansprüche**

1.  Verfahren zur Bildverarbeitung, aufweisend:

    • Ermitteln eines Objekts mit mehreren zusammenzufügenden Teilobjekten in einem jeden digitalen Bild von mehreren digitalen Bildern, die das Objekt enthalten;
    • Ermitteln einer oder mehrerer Porengrößen von Oberflächenmaterialien der zusammenzufügenden Teilobjekte des ermittelten Objekts; und
    • Ermitteln, unter Verwendung der einer oder der mehreren Porengrößen und mittels eines Modells, eines für das Zusammenfügen der Teilobjekte einzusetzenden Klebstoffs aus einem Satz mehrerer vorgegebener und gespeicherter Klebstoffe.

2.  Verfahren gemäß Anspruch 1, ferner aufweisend:
    Erfassen von mehreren digitalen Bildern, die das Objekt enthalten, wobei die mehreren digitalen Bilder das Objekt unter unterschiedlichen Winkeln und/oder bei unterschiedlichen Lichtverhältnissen erfassen.

3.  Verfahren gemäß Anspruch 1 oder 2,
    wobei das Ermitteln, unter Verwendung der einer oder der mehreren Porengrößen, eines für das Zusammenfügen der Teilobjekte einzusetzenden Klebstoffs aus einem Satz mehrerer vorgegebener und gespeicherter Klebstoffe, mittels eines Maschinen-Lern-Modells erfolgt.

4.  Verfahren gemäß einem der Anspruche 1 bis 3, ferner aufweisend:

    • Ermitteln einer oder mehrerer Oberflächenmaterialien der zusammenzufügenden Teilobjekte des ermittelten Objekts;
    • wobei beim Ermitteln des einzusetzenden Klebstoffs das oder die ermittelten Oberflächenmaterialien berücksichtigt werden.

5.  Verfahren gemäß einem der Ansprüche 1 bis 4, ferner aufweisend:

Ermitteln, mittels eines Maschinen-Lern-Modells, einer für das Zusammenfügen der Teilobjekte erforderlichen Menge des ermittelten Klebstoffs.

6.  Verfahren gemäß einem der Ansprüche 1 bis 5, ferner aufweisend:
    Ermitteln einer Anleitung zum Durchführen des Zusammenfügens der Teilobjekte.

7.  Verfahren gemäß einem der Ansprüche 1 bis 6, ferner aufweisend:
    Durchführen des Zusammenfügens der Teilobjekte unter Verwendung des ermittelten Klebstoffs.

8.  Verfahren gemäß Anspruch 7,
    wobei das Zusammenfügen der Teilobjekte unter Einsatz von Augmented Reality durchgeführt wird.

9.  Computerlesbares Speichermedium, in dem Instruktionen gespeichert sind, die, wenn sie von einem Prozessor ausgeführt werden, ein Verfahren gemäß einem der Ansprüche 1 bis 8 implementieren.

# FIG 1

100

| Aufnahme eines digitalen Bildes mit einer Kamera eines Smartgeräts welches mehrere Teilobjekte beinhaltet |
101

| Vorverarbeitung des digitalen Bildes |
102

| Extraktion der relevanten Objektmerkmale |
103

| Training des Maschinen-Lern-Modells |
104

| Erkennung und Lokalisierung anhand des Maschinen-Lern-Modells der Teilobjekte |
105

| Zuordnung der erkannten Teilobjekte zu Objektklassen |
106

| Nachbearbeitung der erkannten Teilobjekte |
107

| Anzeige der annotierten Teilobjekte in AR Anwendung |
108

# FIG 2

200

| Erfassung der Objektoberfläche |
| :---: |

201

| Vorverarbeitung des digitalen Bildes |
| :---: |

202

| Segmentierung des digitalen Bildes |
| :---: |

203

| Erkennung von Hohlräume auf der Oberfläche des Objekts |
| :---: |

204

| Größe und Flächenmessung der erkannten Hohlräume |
| :---: |

205

| Bestimmung der Porosität der Objektoberfläche |
| :---: |

206

# FIG 3

300

| Frakturart |
|---|

301

| Riss |
|---|

310

| Tiefe und Breite ermitteln |
|---|

311

| Material ermitteln |
|---|

312

| Porosität ermitteln |
|---|

313

| Zu verwendenden Klebstoff ermitteln |
|---|

314

| Klebstoffmenge ermitteln |
|---|

315

| Anleitung in AR Anwendung |
|---|

316

| Bruch |
|---|

320

| Anzahl an Bruchstücke ermitteln |
|---|

321

| Konturanalyse |
|---|

322

| Längenverhältnis Bruch / Objekt |
|---|

323

| maximale örtliche Hebelkraft auf Grenzfläche |
|---|

324

| Material ermitteln |
|---|

325

326

| Porosität ermitteln |
|---|

329

327

| Verunreiningungen? |
|---|

| Falls ja, Reinigungsmittel ermitteln |
|---|

| Zu verwendenden Klebstoff ermitteln |
|---|

328

| Klebstoffmenge ermitteln |
|---|

330

| Anleitung in AR Anwendung |
|---|

331

# FIG 4

401

400

| 410 Rissbreite | 0.2-0.5 mm | 0.5-1.5 mm | 1.5-4 mm | 4-5 mm | > 5 mm |
|---|---|---|---|---|---|

401

| 420 Risstiefe | <1 cm | 1-10 cm | >10 cm |
|---|---|---|---|

402

| 430 Material | Holz | Putz | Stein | Kunstoff | ... |
|---|---|---|---|---|---|

403

| 440 Porosität | Ja | Nein |
|---|---|---|

404

RenoMur (Acrylat)

405

# FIG 5

500

| 510 Anzahl an Bruchstücke | 1 | 2 | 3 | 4 | ... |
|---|---|---|---|---|---|

501

| 520 Konturanalyse | Klasse S | Klasse A | Klasse B | Kein Bruch detektierbar |
|---|---|---|---|---|

502

| 530 Längenverhältnis | Bruch > Objekt | ... | Bruch= Objekt | ... | Bruch < Objekt |
|---|---|---|---|---|---|

503

| 540 Max. örtliche Hebelkraft | <= 1 | 1-3 | 4-10 | 10-20 | >20 |
|---|---|---|---|---|---|

504

| 550 Material | Holz | Keramik | Glas | Kunstoff | ... |
|---|---|---|---|---|---|

505

| 560 Porosität | Ja | Nein |
|---|---|---|

506

| 570 Verunreinungen | Ja | Nein |
|---|---|---|

507

| Mit Isopropanol abwischen | „Loctite Super Glue" oder „Loctite Mini-Trio" (Cyanacrylate) |
|---|---|

508          509

FIG 6

600

601

Ermittlung eines Objektes mit mehreren Teilobjekten in einem jeden digitalen Bild von mehreren digitalen Bilder

602

Ermittlung einer oder mehrerer Porengrößen der zusammenzufügende Teilobjekten

603

Ermittlung eines für das Zusammenfügen der Teilobjekte einzusetzenden Klebstoffs aus einem Satz mehrerer vorgegebener und gespeicherter Klebstoffe

FIG 7

702
722
704
714
706
712
714
714
720
708
710
718
716

Europäisches
Patentamt

European
Patent Office

Office européen
des brevets

# EUROPÄISCHER RECHERCHENBERICHT

Nummer der Anmeldung

EP 24 16 3672

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | CN 114 792 404 B (UNIV BEIJING) 15. November 2022 (2022-11-15) * Abschnitt "Contents of the invention" * * Seite 5, die letzten beiden Absätze * * Seite 7, letzter Absatz - Seite 8, erster Absatz * ----- | 1-9 | INV. G06T7/00 |
| Y | Nn: "4 Things to Consider When Choosing an Adhesive", , 28. September 2020 (2020-09-28), XP093192637, Gefunden im Internet: URL:https://web.archive.org/web/2020092815 3237/https://www.gluegun.com/blogs/news/4-things-to-consider-when-choosing-an-adhesi ve [gefunden am 2024-08-05] * Abschnitt, "Surface Type" * ----- | 1-9 | |
| Y | Hlohse: "Wichtige, bei der Klebstoffauswahl zu berücksichtigende Kriterien", , 18. Oktober 2017 (2017-10-18), XP093192642, Gefunden im Internet: URL:https://de.m.wikipedia.org/wiki/Datei: Wichtige,_bei_der_Klebstoffauswahl_zu_ber% C3%BCcksichtigende_Kriterien.jpg [gefunden am 2024-08-05] * das ganze Dokument * ----- | 1-9 | RECHERCHIERTE SACHGEBIETE (IPC)  G06T |

Der vorliegende Recherchenbericht wurde für alle Patentansprüche erstellt

| Recherchenort | Abschlußdatum der Recherche | Prüfer |
|---|---|---|
| München | 6. August 2024 | Engels, Angela |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 16 3672

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-08-2024

| Im Recherchenbericht angeführtes Patentdokument | Datum der Veröffentlichung | Mitglied(er) der Patentfamilie | Datum der Veröffentlichung |
|---|---|---|---|
| CN 114792404 B | 15-11-2022 | KEINE | |

EPO FORM P0461

Für nähere Einzelheiten zu diesem Anhang : siehe Amtsblatt des Europäischen Patentamts, Nr. 12/82